(19) **Europäisches Patentamt / European Patent Office / Office européen des brevets**

(11) **EP 4 741 049 A1**

(12) **EUROPEAN PATENT APPLICATION**
published in accordance with Art. 153(4) EPC

(43) Date of publication:
**13.05.2026 Bulletin 2026/20**

(21) Application number: **24904129.4**

(22) Date of filing: **02.12.2024**

(51) International Patent Classification (IPC):
**B01F 23/53** (2022.01)   **B01F 23/50** (2022.01)
**B01F 35/90** (2022.01)   **B01F 35/71** (2022.01)
**B01F 27/90** (2022.01)   **H01M 4/04** (2006.01)
**B01F 101/59** (2022.01)

(52) Cooperative Patent Classification (CPC):
**B01F 23/50; B01F 23/53; B01F 27/90; B01F 35/71;
B01F 35/90; H01M 4/04;** B01F 2101/59;
Y02E 60/10

(86) International application number:
**PCT/KR2024/019462**

(87) International publication number:
**WO 2025/127564 (19.06.2025 Gazette 2025/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **11.12.2023   KR 20230178547**

(71) Applicant: **LG Energy Solution, Ltd.
Seoul 07335 (KR)**

(72) Inventors:
• **CHOI, Yohan
  Daejeon 34122 (KR)**
• **CHUNG, Changkwon
  Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ELECTRODE SLURRY STORAGE TANK**

(57)    A storage tank for storing an electrode slurry according to an embodiment of the present disclosure comprises: a tank body that stores the electrode slurry in its inside; and an inflow port that is provided at an upper part of the tank body and supplies the electrode slurry into the inside of the tank body, wherein the electrode slurry supplied from the inflow port, with an open end of the inflow port being directed toward the inner wall of the tank body, reaches the inner wall of the tank body and then flows down along the inner wall of the tank body, and wherein the length of the open end of the inflow port in the horizontal direction is larger than the length in the vertical direction.

[FIG. 3]

**Description**

[TECHNICAL FIELD]

Cross-Reference to Related Application(s)

This application claims priority to and the benefit of Korean Patent Application No. 10-2023-0178547, filed on December 11, 2023, with the Korean Intellectual Property Office, the disclosure of which is incorporated herein by reference in its entirety.

The present disclosure relates to a storage tank for electrode slurry, and more particularly, to a storage tank that reduces the temperature deviation between the electrode slurry transferred and flowing into the tank and the slurry previously stored in the tank.

[BACKGROUND]

The use of mobile devices such as cell phones, laptops, camcorders and digital cameras, and energy storage systems(ESS) has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles(EV), hybrid electric vehicles(HEV), plug-in hybrid electric vehicles(P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium secondary batteries are emerging as the most popular, as they are freely rechargeable, have low self-discharge rates, and have high energy density.

A lithium secondary battery generally uses lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are disposed with a separator interposed between them, and an exterior material, i.e., battery case, which hermetically houses the electrode assembly together with an electrolyte.

The manufacturing process of such a lithium secondary battery is roughly classified into an electrode process, an assembly process, and a formation process. Among these processes, the electrode process includes, specifically, processes such as mixing, coating, drying, roll pressing, taping, and slitting. In the mixing process, in which raw materials such as an electrode active material, a conductive material and a binder are mixed to prepare an electrode slurry in a uniform state, heat of mixing is generated, so that the temperature of the electrode slurry gradually rises. In the subsequent transportation process, the electrode slurry temperature is adjusted to a desired temperature through cooling water while passing through multiple tanks. Next, the electrode slurry transported through such multiple tanks is provided on an electrode current collector in a coater and coated.

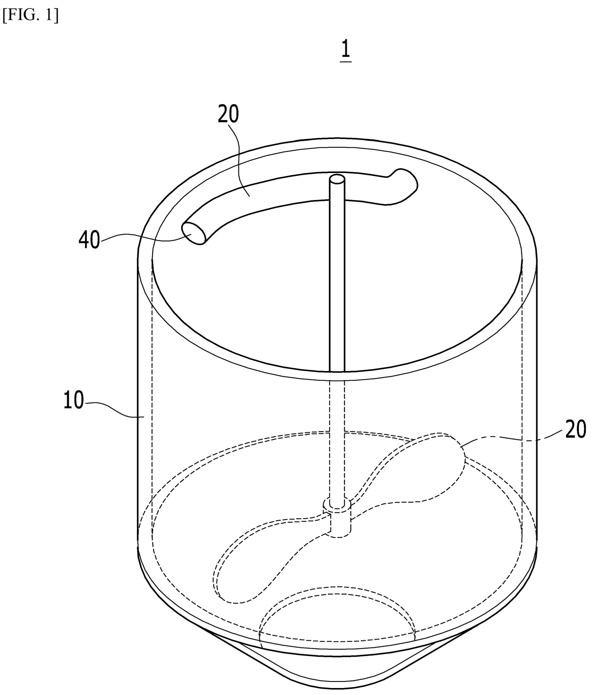

FIG. 1 shows a schematic diagram of an electrode slurry storage tank according to a prior art. The storage tank 1 of the prior art includes a tank body 10, a stirrer 20 that is provided inside the tank body 10 and stirs the electrode slurry, and a piping 30 that supplies the electrode slurry into the inside of the tank body 10. The piping 30 generally has a circular cross section, and similarly, a discharge port 40 located at the end of the piping 30 is also manufactured to have a circular cross section. Meanwhile, since a temperature difference exists between the electrode slurry supplied into the inside of the tank body 10 through the discharge port 40 and the electrode slurry previously stored in the tank body 10, there is a need to provide a method that can reduce this temperature difference.

[DETAILED DESCRIPTION OF THE INVENTION]

[Technical Problem]

It is an object of the present disclosure to reduce the temperature deviation between the electrode slurry previously stored in the tank body and the electrode slurry supplied into the inside of the tank.

However, the technical objects solved by the embodiments of the present disclosure are not limited to those disclosed above, and may be expanded in various ways within the scope of the technical idea included in the present disclosure.

[Technical Solution]

A storage tank for storing an electrode slurry according to an embodiment of the present disclosure comprises: a tank body that stores the electrode slurry in its inside; and an inflow port that is provided at an upper part of the tank body and supplies the electrode slurry into the inside of the tank body, wherein an open end of the inflow port being directed toward an inner wall of the tank body such that the electrode slurry supplied from the inflow port reaches the inner wall of the tank body and then flows down along the inner wall of the tank body, and wherein a length of the open end of the inflow port in a horizontal direction is larger than a length in a vertical direction.

An aspect ratio of the open end of the inflow port may be larger than an aspect ratio of a vertical cross section of a piping connected to the inflow port, and a vertical cross-sectional area of the open end of the inflow port may be equal to or smaller than a vertical cross-sectional area of the piping.

A circumference of the open end of the inflow port may be equal to a circumference of a vertical cross-section of a piping connected to the inflow port.

An aspect ratio of the open end of the inflow port may be more than 1 time and 5 times or less of an aspect ratio of a vertical cross section of a piping connected to the inflow port.

An aspect ratio of the open end of the inflow port may be 1.5 times or more and 3 times or less of an aspect ratio of a vertical cross section of the piping connected to the inflow port.

A vertical cross-sectional area of the open end of the inflow port may be 38.5% or more and less than 100% of a vertical cross-sectional area of the piping.

A vertical cross-sectional area of the open end of the inflow port may be 60% or more and 92.3% or less of a vertical cross-sectional area of the piping.

The open end of the inflow port may include an elliptical shape.

The open end of the inflow port may include a rectangular shape.

The open end of the inflow port may have a circular shape.

The open end of the inflow port may be manufactured by pressing an end of a piping connected to the inflow port by a press process.

The storage tank further comprises a temperature control unit surrounding the tank body, wherein the electrode slurry that has reached the inner wall of the tank body may exchange heat with the temperature control unit while flowing down along the inner wall of the tank body.

The temperature control unit may surround an outer wall of the tank body or be integrated with the outer wall, and a coolant may flow inside the temperature control unit to exchange heat with the electrode slurry.

The storage tank may further comprise a stirrer that is provided inside the tank body, and has blades that rotate around a rotation axis to stir the electrode slurry.

The storage tank is connected to a mixer for preparing an electrode slurry, and receives supply of the electrode slurry from the mixer, and the electrode slurry may be prepared by mixing electrode raw materials including an electrode active material, a conductive material, and a binder.

[Advantageous Effects]

According to the present disclosure, since the temperature deviation between the electrode slurry previously stored in the tank and the electrode slurry supplied into the tank can be reduced due to the structural features of the piping of the storage tank, the process for reducing the temperature deviation between the slurries can be improved more efficiently, and the quality of the produced electrodes can also be improved.

The effects of the present disclosure are not limited to the effects mentioned above and additional other effects not described above will be clearly understood from the description of the appended claims by those skilled in the art.

[BRIEF DESCRIPTION OF THE DRAWING]

FIG. 1 shows a schematic diagram of an electrode slurry storage tank according to a prior art.
FIG. 2 shows an electrode slurry storage tank according to an embodiment of the present disclosure.
FIG. 3 shows an enlarged view of the inflow port of the storage tank of FIG. 2.
FIG. 4 shows one embodiment of the inflow port of FIG. 3.
FIG. 5 show another embodiment of the inflow port of FIG. 3.
FIG. 6 is a graph showing the results of testing the change in pressure (pressure ratio) caused by sequentially increasing the aspect ratio of the vertical cross section of the inflow port according to an embodiment of the present disclosure.

[DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, specific embodiments of the present invention will be described with reference to the accompanying drawings.

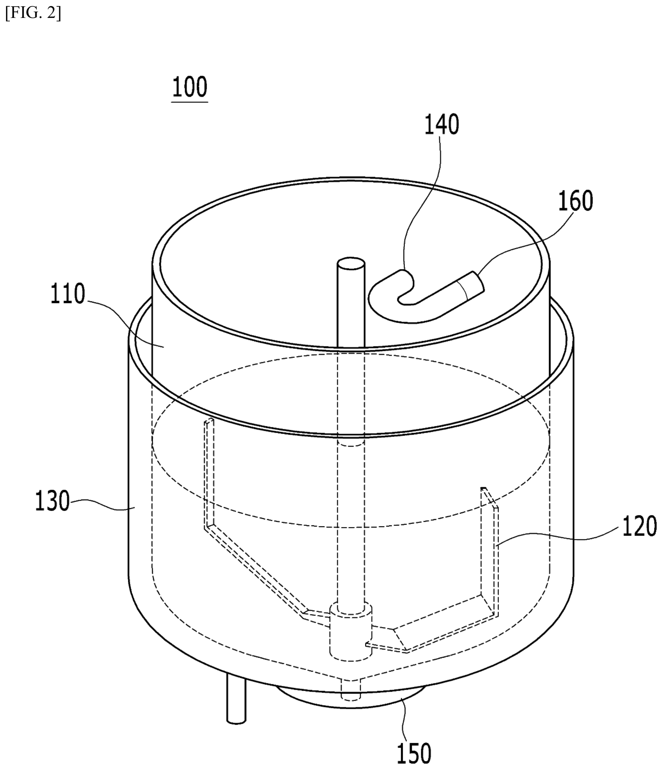

FIG. 2 shows a schematic diagram of an electrode slurry storage tank according to an embodiment of the present disclosure.

The electrode slurry storage tank 100 of FIG. 2 includes a tank body 110 for storing an electrode slurry in its inside, a stirrer 120 provided inside the tank body 110, a temperature control unit 130 for surrounding the inner space of the tank body 110, an inflow port 140 for supplying the electrode slurry into the inside of the tank body 110, and a discharge port 150 for providing the electrode slurry from the tank body 110 to subsequent components.

According to the present disclosure, the electrode slurry is provided for manufacturing an electrode among the electrodes and separators that constitute the electrode assembly of a secondary battery. The electrode slurry means one in which raw materials such as an electrode active material, a conductive material and a binder are uniformly mixed in a solvent in a mixer, and the electrode slurry is provided on an electrode collector to produce an electrode. The electrode means both a positive electrode and a negative electrode, and the present disclosure can be applied to both a positive electrode slurry preparation process and a negative electrode slurry preparation process.

The storage tank 100 is connected to a previous component (e.g., mixer or another storage tank directly or indirectly connected to the mixer) and receives supply of the electrode slurry from the previous component. The storage tank 100 is stored with the supplied electrode slurry and then connected to a subsequent component (e.g., coater or another storage tank directly or indirectly connected to the coater) and supplies the electrode slurry to the subsequent component.

The storage tank 100 stores the electrode slurry in an empty space inside the tank body 110. A stirrer 120 is also provided inside the tank body 110. The blades of the stirrer 120 rotate around the central axis of the stirrer 120 and allow the electrode slurry to flow in its inside, so that the electrode slurry stored in its inside is uniformly mixed. Accordingly, the electrode slurry stored inside the tank body 110 becomes uniform in temperature as a whole, and also prevents the electrode slurry from solidifying.

The temperature control unit 130 may surround the outer wall of the tank body 110 or be integrated with the outer wall, and adjusts the temperature of the electrode slurry stored in the inner space of the tank body 110. The temperature control unit 130 may wholly or partially surround the outer wall of the tank body 110, and, for example, a coolant (e.g., cooling water) may be flowed into the temperature control unit 130 and flow inside the temperature control unit 130. The coolant that has exchanged heat with the inside of the tank body 110 may be discharged again to the outside of the temperature control unit 130. The temperature control unit 130 may be a tank shape that surrounds the outer wall of the tank body 110 or may be a spiral tube shape. The temperature control unit is not particularly limited, and any temperature control unit used in the electrode manufacturing process may be appropriately adopted and applied in accordance with the environment in which the present disclosure is implemented.

The tank body 110 may also be provided with a temperature sensor (not shown) that further measures the temperature of the electrode slurry. The temperature sensor is not particularly limited, and any temperature sensor used in the electrode manufacturing process may be appropriately adopted and applied in accordance with the environment in which the present disclosure is realized.

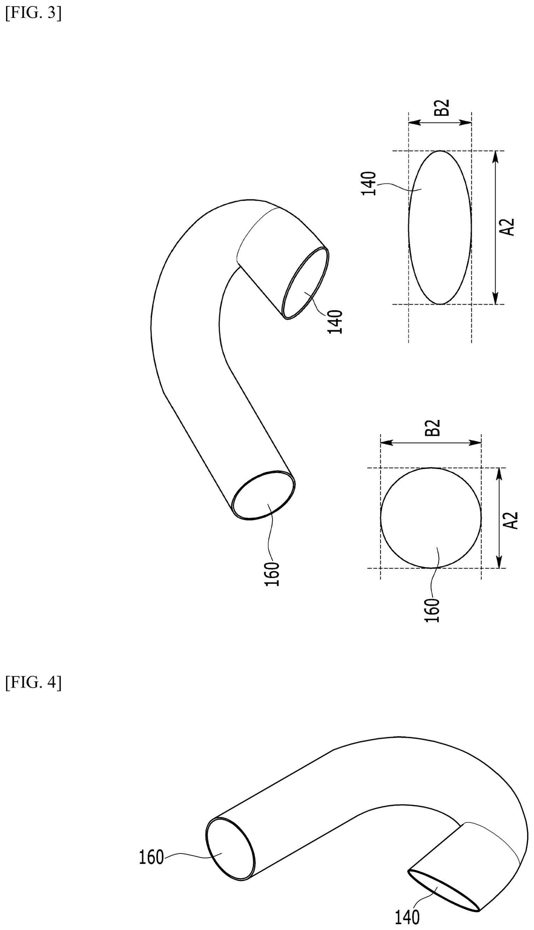

The inflow port 140 is located at an upper part of the storage tank 100, and the inflow port 140 is connected to a piping 160. The shape and structure of the piping 160 are not limited to those shown in FIG. 3, and may be variously modified and changed in accordance with the purpose of the present disclosure. The piping 160 connected to the inflow port 140 may be further provided with an opening/closing unit such as a valve and/or a sensing unit. In addition, the discharge port 150 is located at the lower end of the storage tank 100, and the discharge port 150 is also connected by a piping (not shown). Similarly, the piping connected to the discharge port 150 may be further provided with an opening/closing unit such as a valve and/or a sensing unit.

Meanwhile, it is most preferable that the electrode slurry stored in the storage tank 100 is always kept constant at a desired temperature to be suitable for the process. However, if a deviation exists between the temperature of the electrode slurry flowing in through the inflow port 140 and the temperature of the electrode slurry stored inside the tank body 110, it is necessary to adjust the temperature from the time when the electrode slurry is supplied into the inside of the storage tank 100 through the inflow port 140. A method is adopted in which the electrode slurry flowing in through the inflow port 140 flows down along the inner wall of the storage tank 100 and its temperature is adjusted by a temperature control unit 150 surrounding the storage tank 100. At this time, the electrode slurry flowing in through the inflow port 140 needs to properly reach the inner wall of the storage tank 100 (that is, the electrode slurry needs to be supplied at the inflow port 140 with sufficient pressure to allow the electrode slurry to reach the inner wall of the storage tank 100). It is necessary that the electrode slurry reaches the inner wall of the storage tank 100 over a wide area as much as possible and flows down. The electrode slurry storage tank 100 according to the present disclosure has a structure and shape of the inflow port 140 for reducing such temperature deviations.

First, the open end of the inflow port 140 directs toward the inner wall of the tank body 110. As a result, the electrode slurry flowing into the tank body 110 through the inflow port 140 flows down along the inner wall of the tank body 110 without immediately falling into the electrode slurry stored in its inside. At this time, since the tank body 110 is surrounded by a temperature control unit 150, the electrode slurry that has reached the inner wall of the tank body 110 flows down along the inner wall of the tank body 110 and its temperature is adjusted by the temperature control unit 150.

At this time, the electrode slurry flows down in the vertical direction, which is the direction of gravity. Although the electrode slurry is supplied in the same amount from the inflow port 140, and if the electrode slurry flows down along a wider area in the inner wall of the tank body 110 in the horizontal direction, the electrode slurry can exchange heat with the temperature control unit 150 over a wider area. Therefore, in order to ensure that the electrode slurry supplied from the inflow port 140 flows down over a wider area in the inner wall of the tank body 110, the open end of the inflow port 140 preferably has a shape that the length in the horizontal direction is larger than the length in the vertical direction. In the specification of the present disclosure, the horizontal direction means a direction parallel to the horizontal plane or the bottom surface of the process equipment space, and the vertical direction means a direction (direction of gravity) orthogonal to the horizontal plane or the bottom surface of the process equipment space.

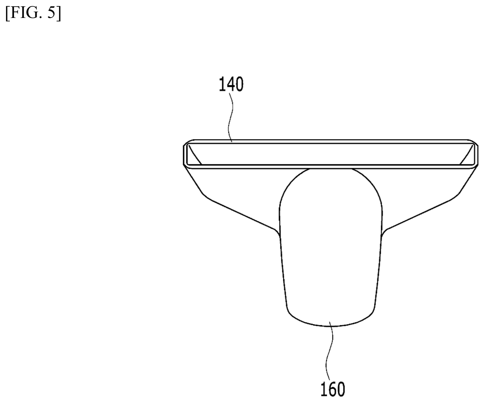

FIG. 3 shows an enlarged view of the inflow port of the storage tank of FIG. 2. FIG. 4 shows one embodiment of the inflow port of FIG. 3. FIG. 5 show another embodiment of the inflow port of FIG. 3.

First, FIG. 3 illustrates an inflow port 140, and a piping 160 connected to the inflow port 140. In addition, to facilitate understanding, the open end of the inflow port 140 directing toward the inner wall of the storage tank 100 of FIG. 2 is shown by changing the viewing angles.

As described above, the length A1 of the inflow port 140 in the horizontal direction is larger than the length B1 in the vertical direction. Further, the length A1 of the inflow port 140 in the horizontal direction is larger than the diameter of the piping 160 or the length A2 in the horizontal direction, and the length B1 of the inflow port 140 in the vertical direction is smaller than the diameter of the piping 160 or the length B2 in the vertical direction. That is, the aspect ratio A1:B1 of the cross section of the inflow port 140 is larger than the aspect ratio A2:B2 of the cross section of the piping 160. As used herein, the aspect ratio means the width-to-height ratio in the vertical cross section.

For example, as shown in FIG. 3, the inflow port 140 may be manufactured in an elliptical shape in which the length A1 in the horizontal direction is longer than the length B1 in the vertical direction.

Alternatively, as in the embodiment of FIG. 4, when the cross section of the piping 160 is circular, the inflow port 140 may be manufactured by pressing the open end of the piping 160 having a circular cross section by a press method. Alternatively, in some cases, the inflow port 140 may also be manufactured using a mold in the shape shown in FIG. 4. Further, the piping 160 and the inflow port 140 may be integrally formed. Meanwhile, the present disclosure is not limited to those described above, and the inflow port 140 may have a substantially rectangular cross section, as in the embodiment of FIG. 5. At this time, the vertical cross section of the piping 160 may be circular as shown in FIG. 5, but may also be rectangular, if necessary. The present disclosure is not limited to those shown in FIG. 5, and various modifications and changes can be made in the embodiments. In addition, the piping 160 and the inflow port 160 may be manufactured separately and then assembled and joined to each other, or the piping 160 and the inflow port 160 may be manufactured in various shapes, structures, etc. In addition, the same can be applied even if the cross section of the piping 160 is not circular but rectangular, or has other shapes.

Meanwhile, referring again to FIG. 3, the flow velocity of the electrode slurry at the inflow port 140 must be equal to or larger than the flow velocity of the electrode slurry passing through the vertical cross section of the piping 160. The open end of the inflow port 140 is spaced apart from the inner wall of the tank body 110 by a predetermined distance. This is because when the electrode slurry flows into the tank body 110 from the inflow port 140, it must reach the inner wall of the tank body 110. That is, this is because the electrode slurry that has reached the inner wall of the tank body 110 can exchange heat with the temperature control unit 150. In a greater detail, it is necessary to prevent the case where the flow velocity of the electrode slurry at the inflow port 140 is reduced below the flow velocity of the electrode slurry passing through the vertical cross section of the piping 160, and thus, the electrode slurry does not reach the inner wall of the tank body 110.

For this purpose, as described above, under the premise that the aspect ratio A1:B1 of the inflow port 140 is larger than the aspect ratio A2:B2 of the cross section of the piping 160, the vertical cross-sectional area of the inflow port 140 may be equal to or smaller than the vertical cross-sectional area of the piping 160. For more details, refer to the following description.

First, except for exceptional cases, such as when the electrode slurry reaches the upper limit of the storage capacity inside the storage tank 100 or when the supply of the electrode slurry is interrupted due to a stop, etc. in a previous process or a subsequent process of the storage tank 100, generally, when viewed based on predetermined time intervals, it is preferable that a constant amount of electrode slurry is supplied into the inside of the tank body 110 during the predetermined time interval.

That is, assuming that the flow rate of the electrode slurry at the inflow port 140 and the flow rate of the electrode slurry passing through the vertical cross section of the piping 160 are substantially equal, and referring to the following relational expression (Mathematical Equation 1) regarding the flow rate and flow velocity of the fluid, it is as follows.

[Mathematical Equation 1]

$$\text{Flow rate (Q)} = \text{Vertical cross-sectional area (A)} \times \text{Flow velocity (v)}$$

In case where the flow rate of the electrode slurry at the inflow port 140 and the flow rate of the electrode slurry passing through the vertical cross section of the piping 160 are substantially equal, in order for the flow velocity of the electrode slurry at the inflow port 140 to be equal to or larger than the flow velocity of the electrode slurry passing through the vertical cross section of the piping 160, the vertical cross-sectional area of the inflow port 140 must be equal to or smaller than the vertical cross-sectional area of the piping 160.

According to the present disclosure, the aspect ratio A1:B1 of the inflow port 140 is larger than the aspect ratio A2:B2 of the cross section of the piping 160. Further, the size of the vertical cross-sectional area of the inflow port 140 is equal to or smaller than the size of the vertical cross-sectional area of the piping 160. For example, the aspect ratio A1:B1 of the inflow port 140 may be more than 1 time and less than 5 times the aspect ratio A2:B2 of the cross section of the piping 160. Alternatively, for example, the aspect ratio A1:B1 of the inflow port 140 may be more than 1.5 times and 3 times or less of the aspect ratio A2:B2 of the cross section of the piping 160. Further, for example, the vertical cross-sectional area of the inflow port 140 may be more than 50% and less than 100% of the vertical cross-sectional area of the piping 160. Alternatively, for example, the vertical cross-sectional area of the inflow port 140 may be 60% or more and less than 90% of the vertical cross-sectional area of the piping 160.

Furthe, according to the present disclosure, in an embodiment of achieving a case where the aspect ratio A1:B1 of the inflow port 140 is larger than the aspect ratio A2:B2 of the cross section of the piping 160, but the size of the vertical cross-sectional area of the inflow port 140 is equal to or smaller than the size of the vertical cross-sectional area of the piping 160, the circumference of the vertical cross-sectional area of the inflow port 140 is equal to the circumference of the vertical cross-sectional area of the piping 160. In a greater detail, when the circumference of the vertical cross-sectional area is constant, the vertical cross-sectional area decreases if the aspect ratio increases.

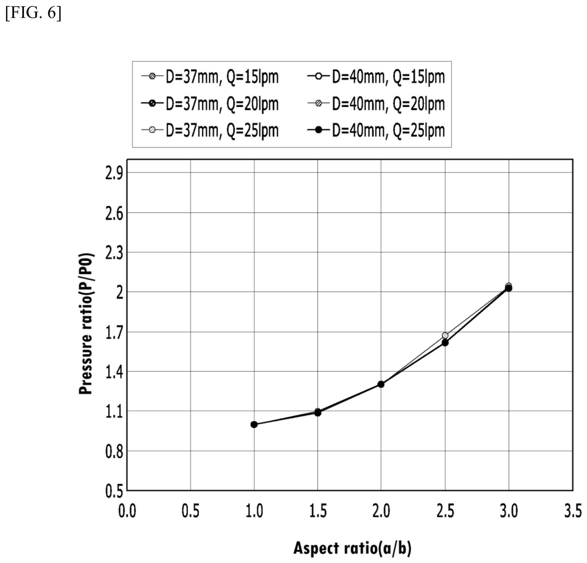

FIG. 6 is a graph showing the results of testing the change in pressure (pressure ratio) caused by sequentially increasing the aspect ratio of the vertical cross section of the inflow port according to an embodiment of the present disclosure. For reference, the case where the aspect ratio of the vertical cross section of the inflow port is 1 is a comparative example according to the prior art, and is shown together for comparison between the present disclosure and the prior art.

The X-axis represents the aspect ratio of the vertical cross section (open cross section) of the inflow port 140, and the Y-axis represents the pressure ratio $P/P_0$. In a greater detail, the pressure ratio $P/P_0$ of the Y-axis means the value that the pressure value P measured in the vertical cross section of the piping 160 when the aspect ratio of the vertical cross section of the inflow port 140 increases more than 1 divided by the pressure value P0 measured in the vertical cross section of the piping 160 when the aspect ratio of the inflow port 140 is 1. From the pressure ratio $P/P_0$, it can be known how much the pressure value increases when the slurry flows into the storage tank 100 when the aspect ratio of the vertical cross section of the inflow port 140 increases compared to when the aspect ratio of the vertical cross section of the inflow port 140 is 1.

As the aspect ratio of the inflow port 140 on the X-axis increases, the pressure value measured on the vertical cross section of the piping 160 on the Y-axis also tends to increase. However, if the pressure ratio $P/P_0$ exceeds a predetermined value, it may have a strained effect on the performance of the pressure pump that moves the slurry in the piping 160, so that the aspect ratio of the inflow port 140 cannot increase indefinitely. For example, in this test, if the pressure ratio $P/P_0$ exceeds 2, the pressure pump may need to be replaced, so that the aspect ratio of the inflow port 140 may be set to be more than 1 time and 3 times or less of the aspect ratio of the piping 160. That is, when the aspect ratio of the piping 160 is 1, the aspect ratio of the inflow port 140 may be more than 1 and 3 or less. However, the present disclosure is not limited to those described above, and the ratio of the aspect ratio of the inflow port 140 to the aspect ratio of the piping 160 may be variously adjusted in accordance with the specifications of the pressure pump or the environment in which the present disclosure is implemented.

The graph of FIG. 6 is summarized and shown in Tables 1 to 6 below. Here, when the vertical cross section of the piping 160 is circular, D means the diameter, and when the vertical cross section of the inflow port 140 is elliptical, a means the radius of the major axis and b means the radius of the minor axis. For reference, in Tables 1 to 6, the units of a, b, and the circumference are m, the unit of the cross-sectional area is $m^2$, and the unit of the pressure is Pa. Referring to FIG. 3, D is equal to the values of A2 and B2, respectively, a is the value obtained by dividing A1 by 2, and b corresponds to the value obtained by dividing B1 by 2.

Tables 1 to 3 below show the results of measuring the pressure ratio $P/P_0$, while setting the aspect ratio of the vertical cross section of the piping 160 to be 1 and increasing the aspect ratio of the vertical cross section of the inflow port 140, under the condition where D is 0.037 m, the flow rates of slurry at the vertical cross section of the piping 160 and the vertical cross section of the inflow port 140 are adjusted to 25 lpm, 20 lpm, and 15 lpm, respectively, and the circumferential length of the vertical cross section of the piping 160 and the circumferential length of the vertical cross section of the inflow port 140 are kept constant.

[Table 1]

| 25 lpm | | | | | | |
|---|---|---|---|---|---|---|
| Aspect ratio | a | b | Circumferential length | Cross-sectional area | Pressure | Pressure ratio |
| 1.0 | 0.0185 | 0.0185 | 0.116239 | 0.001075 | 6537.755 | 1.00000 |
| 1.5 | 0.021769 | 0.014513 | 0.116239 | 0.000993 | 7136.07 | 1.09152 |
| 2.0 | 0.023401 | 0.0117 | 0.116239 | 0.00086 | 8543.991 | 1.30687 |
| 2.5 | 0.024292 | 0.009717 | 0.116239 | 0.000742 | 10932.56 | 1.67222 |
| 3.0 | 0.02482 | 0.008273 | 0.116239 | 0.000645 | 13361.43 | 2.04373 |

[Table 2]

| 20 lpm | | | | | | |
|---|---|---|---|---|---|---|
| Aspect ratio | a | b | Circumferential length | Cross-sectional area | Pressure | Pressure ratio |
| 1.0 | 0.0185 | 0.0185 | 0.116239 | 0.001075 | 5518.885 | 1.00000 |
| 1.5 | 0.021769 | 0.014513 | 0.116239 | 0.000993 | 6029.814 | 1.09258 |
| 2.0 | 0.023401 | 0.0117 | 0.116239 | 0.00086 | 7199.82 | 1.30458 |
| 2.5 | 0.024292 | 0.009717 | 0.116239 | 0.000742 | 8923.775 | 1.61695 |
| 3.0 | 0.02482 | 0.008273 | 0.116239 | 0.000645 | 11208.11 | 2.03086 |

[Table 3]

| 15 lpm | | | | | | |
|---|---|---|---|---|---|---|
| Aspect ratio | a | b | Circumferential length | Cross-sectional area | Pressure | Pressure ratio |
| 1.0 | 0.0185 | 0.0185 | 0.116239 | 0.001075 | 4450.286 | 1.00000 |
| 1.5 | 0.021769 | 0.014513 | 0.116239 | 0.000993 | 4888.569 | 1.09848 |

(continued)

| 15 lpm | | | | | | |
|---|---|---|---|---|---|---|
| Aspect ratio | a | b | Circumferential length | Cross-sectional area | Pressure | Pressure ratio |
| 2.0 | 0.023401 | 0.0117 | 0.116239 | 0.00086 | 5822.128 | 1.30826 |
| 2.5 | 0.024292 | 0.009717 | 0.116239 | 0.000742 | 7190.208 | 1.61567 |
| 3.0 | 0.02482 | 0.008273 | 0.116239 | 0.000645 | 9020.43 | 2.02693 |

Tables 4 to 6 below show the results of measuring the pressure ratio $P/P_0$, while setting the aspect ratio of the vertical cross section of the piping 160 to be 1 and increasing the aspect ratio of the vertical cross section of the inflow port 140, under the condition where D is 0.040 m, the flow rates of slurry at the vertical cross section of the piping 160 and the vertical cross section of the inflow port 140 are adjusted to 25 lpm, 20 lpm, and 15 lpm, respectively, and the circumferential length of the vertical cross section of the piping 160 and the circumferential length of the vertical cross section of the inflow port 140 are kept constant.

[Table 4]

| 25 lpm | | | | | | |
|---|---|---|---|---|---|---|
| Aspect ratio | a | b | Circumferential length | Cross-sectional area | Pressure | Pressure ratio |
| 1.0 | 0.02 | 0.02 | 0.125664 | 0.001257 | 5145.807 | 1.00000 |
| 1.5 | 0.023534 | 0.015689 | 0.125664 | 0.00116 | 5608.157 | 1.08985 |
| 2.0 | 0.025298 | 0.012649 | 0.125664 | 0.001005 | 6719.897 | 1.30590 |
| 2.5 | 0.026261 | 0.010505 | 0.125664 | 0.000867 | 8317.565 | 1.61638 |
| 3.0 | 0.026833 | 0.008944 | 0.125664 | 0.000754 | 10432.49 | 2.02738 |

[Table 5]

| 20 lpm | | | | | | |
|---|---|---|---|---|---|---|
| Aspect ratio | a | b | Circumferential length | Cross-sectional area | Pressure | Pressure ratio |
| 1.0 | 0.02 | 0.02 | 0.125664 | 0.001257 | 4315.428 | 1.00000 |
| 1.5 | 0.023534 | 0.015689 | 0.125664 | 0.00116 | 4704.023 | 1.09005 |
| 2.0 | 0.025298 | 0.012649 | 0.125664 | 0.001005 | 5643.728 | 1.30780 |
| 2.5 | 0.026261 | 0.010505 | 0.125664 | 0.000867 | 7005.856 | 1.62344 |
| 3.0 | 0.026833 | 0.008944 | 0.125664 | 0.000754 | 8779.271 | 2.03439 |

[Table 6]

| 15 lpm | | | | | | |
|---|---|---|---|---|---|---|
| Aspect ratio | a | b | Circumferential length | Cross-sectional area | Pressure | Pressure ratio |
| 1.0 | 0.02 | 0.02 | 0.125664 | 0.001257 | 3480.829 | 1.00000 |
| 1.5 | 0.023534 | 0.015689 | 0.125664 | 0.00116 | 3793.045 | 1.08970 |
| 2.0 | 0.025298 | 0.012649 | 0.125664 | 0.001005 | 4563.961 | 1.31117 |
| 2.5 | 0.026261 | 0.010505 | 0.125664 | 0.000867 | 5639.295 | 1.62010 |
| 3.0 | 0.026833 | 0.008944 | 0.125664 | 0.000754 | 7041.636 | 2.02298 |

The temperature deviations between the embodiment of the present disclosure and the comparative example of the prior art will be described below, respectively.
First, in both the embodiment and the comparative example, the inflow port 140 (i.e., the open end of the inflow port 140) directs toward the inner wall of the tank body 110. The experiment was also performed under the assumption that the temperature of the slurry flowing into the inflow port 140 is 23 degrees Celsius, and the temperature of the inner wall of the tank body 110 by the temperature control unit 150 is 40 degrees Celsius.

In the embodiment, the simulation was performed under the condition that the aspect ratio of the vertical cross section of the inflow port 140 was 3.0, the D of the piping was 0.037 (m), and the flow rate was 6.5 (lpm). When the circumferential length of the piping 160 is equal to the circumferential length of the inflow port 140, the a and b values of the inflow port 140 are 0.02482 (m) and 0.008273 (m), respectively, and the pressure is 4782 (Pa). In the embodiment, the average temperature of the slurry at the end point of the slurry that has moved along the inner wall of the storage tank 100 (i.e., the point just before the slurry that has flowed down along the inner wall of the tank body 110 is combined with the previously stored slurry) is 27.0 degrees Celsius. For reference, the average temperature means the surface average temperature, which means the average value of the temperature of the slurry at each point across the cross section of the end of the slurry.

On the other hand, in the comparative example, and the simulation was performed under the condition where the aspect ratio of the vertical cross section of the inflow port 140 was set to 1.0, and the D of the piping was 0.037 (m) and the flow rate was 6.5 (lpm) similarly to the embodiment. When the circumferential length of the piping 160 and the circumferential length of the inflow port 140 are equal, the a and b values of the inflow port 140 are 0.0185 (m) and 0.0185 (m), respectively, and the pressure is 1412 (Pa). In the comparative example, the average temperature of the slurry at the end point of the slurry that moved along the inner wall of the tank body 110 is 23.7 degrees Celsius. For the definition related to the average temperature, refer to those described above.

In this case, in the embodiment, the temperature deviation between the temperature set in the temperature control unit 150 and the average temperature of the slurry at the end point of the slurry is 13.0 degrees Celsius. In the comparative example, the temperature deviation between the temperature set in the temperature control unit 150 and the average temperature of the slurry at the end point of the slurry is 16.3 degrees Celsius. That is, it can be seen that in the embodiment, the temperature deviation of the electrode slurry inside the storage tank 100 could be reduced compared to the comparative example, and the temperature deviation was reduced by about 20.2%. This means that according to the embodiment of the present disclosure, the difference between the slurry temperature at the inflow port 140 in the storage tank 100 and the slurry temperature at the end point of the slurry can be reduced compared to the prior art. That is, it means that the temperature deviation between the slurry temperature at the inflow port 140 and the slurry temperature just before being combined with the stored slurry can be reduced, thereby making the temperature control of the slurry smoother.

In summary, in the electrode slurry storage tank 100 of the present disclosure, the aspect ratio of the inflow port 140 through which the electrode slurry flows into the inside of the storage tank 100 is larger than the aspect ratio of the cross section of the piping connected to the inflow port 140. Further, the size of the vertical cross-sectional area of the inflow port 140 is equal to or smaller than the size of the vertical cross-sectional area of the piping 160. Accordingly, the electrode slurry transported through the piping 160 is supplied into the inside of the storage tank 100 at a higher pressure and reaches the inner wall of the tank body 110. That is, even with the same flow rate, when the electrode slurry flows into the storage space inside the tank body 110 from the inflow port 140, the pressure (flow velocity) increases, so that the electrode slurry can sufficiently reach the inner wall of the tank body 110.

In addition, the electrode slurry that has reached the inner wall of the tank body 110 contacts the inner wall of the tank body 110 to be longer in the horizontal direction than in the vertical direction. The electrode slurry that flows down the inner wall of the tank body 110 by gravity can contact the inner wall of the tank body 110 over a wider area and exchange heat with the temperature control unit 160. Accordingly, since the electrode slurry flows down along the inner wall of the tank body 110 and its temperature is sufficiently adjusted by the temperature control unit 160, the temperature deviation between the electrode slurry flowing in from the inflow port 140 and the electrode slurry previously stored inside the storage tank 100 can be reduced more effectively. As a result, the quality of the produced electrodes can also be improved.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the invention, the scope of which is defined in the appended claims and their equivalents.

[Description of Reference Numerals]

100: electrode slurry storage tank
110: tank body
120: stirrer
130: temperature control unit
140: inflow port
150: discharge port

160: piping

**Claims**

1. A storage tank for storing an electrode slurry, comprising:

   a tank body that stores the electrode slurry in its inside; and
   an inflow port that is provided at an upper part of the tank body and supplies the electrode slurry into the inside of the tank body,
   wherein an open end of the inflow port being directed toward an inner wall of the tank body such that the electrode slurry supplied from the inflow port reaches the inner wall of the tank body and then flows down along the inner wall of the tank body, and
   wherein a length of the open end of the inflow port in a horizontal direction is larger than a length in a vertical direction.

2. The storage tank according to claim 1,

   wherein an aspect ratio of the open end of the inflow port is larger than an aspect ratio of a vertical cross section of a piping connected to the inflow port, and
   a vertical cross-sectional area of the open end of the inflow port is equal to or smaller than a vertical cross-sectional area of the piping.

3. The storage tank according to claim 1,
   wherein a circumference of the open end of the inflow port is equal to a circumference of a vertical cross-section of a piping connected to the inflow port.

4. The storage tank according to claim 1,
   wherein an aspect ratio of the open end of the inflow port is more than 1 time and 5 times or less of an aspect ratio of a vertical cross section of a piping connected to the inflow port.

5. The storage tank according to claim 4,
   wherein an aspect ratio of the open end of the inflow port is 1.5 times or more and 3 times or less of an aspect ratio of a vertical cross section of the piping connected to the inflow port.

6. The storage tank according to claim 2,
   wherein a vertical cross-sectional area of the open end of the inflow port is 38.5% or more and less than 100% of a vertical cross-sectional area of the piping.

7. The storage tank according to claim 6,
   wherein a vertical cross-sectional area of the open end of the inflow port is 60% or more and 92.3% or less of a vertical cross-sectional area of the piping.

8. The storage tank according to claim 1,
   wherein the open end of the inflow port includes an elliptical shape.

9. The storage tank according to claim 1,
   wherein the open end of the inflow port includes a rectangular shape.

10. The storage tank according to claim 1,
    wherein the open end of the inflow port has a circular shape.

11. The storage tank according to claim 1,
    wherein the open end of the inflow port is manufactured by pressing an end of a piping connected to the inflow port by a press process.

12. The storage tank according to claim 1,

    further comprising a temperature control unit surrounding the tank body,

wherein the electrode slurry that has reached the inner wall of the tank body exchanges heat with the temperature control unit while flowing down along the inner wall of the tank body.

13. The storage tank according to claim 12,

wherein the temperature control unit surrounds an outer wall of the tank body or is integrated with the outer wall, and
a coolant flows inside the temperature control unit to exchange heat with the electrode slurry.

14. The storage tank according to claim 1,
further comprising a stirrer that is provided inside the tank body, and has blades that rotate around a rotation axis to stir the electrode slurry.

15. The storage tank according to claim 1,

wherein the storage tank is connected to a mixer for preparing an electrode slurry, and receives supply of the electrode slurry from the mixer, and
the electrode slurry is prepared by mixing electrode raw materials including an electrode active material, a conductive material, and a binder.

[FIG. 1]

[FIG. 2]

[FIG. 3]

[FIG. 4]

[FIG. 5]

[FIG. 6]

## INTERNATIONAL SEARCH REPORT

| International application No. |
|---|
| **PCT/KR2024/019462** |

| A. | CLASSIFICATION OF SUBJECT MATTER |
|---|---|

**B01F 23/53**(2022.01)i; **B01F 23/50**(2022.01)i; **B01F 35/90**(2022.01)i; **B01F 35/71**(2022.01)i; **B01F 27/90**(2022.01)i; **H01M 4/04**(2006.01)i; **B01F 101/59**(2022.01)i

According to International Patent Classification (IPC) or to both national classification and IPC

| B. | FIELDS SEARCHED |
|---|---|

Minimum documentation searched (classification system followed by classification symbols)

B01F 23/53(2022.01); B01F 101/59(2022.01); B01F 15/00(2006.01); B01F 27/91(2022.01); B01F 35/00(2022.01); B01F 35/95(2022.01); B01F 7/16(2006.01); B05C 11/10(2006.01); B05C 5/00(2006.01); H01M 4/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 슬러리(slurry), 저장(storage), 탱크(tank), 교반(stirring), 온도(temperature), 조절(control), 전극(electrode)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0087050 A (LG ENERGY SOLUTION, LTD.) 24 June 2022 (2022-06-24) See paragraphs [0006], [0091], [0092] and [0096], and figures 1, 5 and 6. | 1-11 |
| Y | | 12-15 |
| Y | KR 10-2605228 B1 (TSI CO., LTD.) 27 November 2023 (2023-11-27) See claims 1, 9 and 10, paragraphs [0028], [0030] [0032], [0037] and [0039], and figures 1 and 3. | 12-15 |
| A | KR 10-2022-0051708 A (LG ENERGY SOLUTION, LTD.) 26 April 2022 (2022-04-26) | 1-15 |
| A | KR 10-2023-0073033 A (LG ENERGY SOLUTION, LTD.) 25 May 2023 (2023-05-25) | 1-15 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 March 2025** | **12 March 2025** |

| Name and mailing address of the ISA/KR | Authorized officer |
|---|---|
| **Korean Intellectual Property Office** **Government Complex-Daejeon Building 4, 189 Cheongsa-** **ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2024/019462** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2012-0093684 A (VINATECH CO., LTD.) 23 August 2012 (2012-08-23) | 1-15 |

**INTERNATIONAL SEARCH REPORT**
**Information on patent family members**

International application No.

**PCT/KR2024/019462**

| Patent document cited in search report | | | Publication date (day/month/year) | Patent family member(s) | | | Publication date (day/month/year) |
|---|---|---|---|---|---|---|---|
| KR | 10-2022-0087050 | A | 24 June 2022 | None | | | |
| KR | 10-2605228 | B1 | 27 November 2023 | None | | | |
| KR | 10-2022-0051708 | A | 26 April 2022 | None | | | |
| KR | 10-2023-0073033 | A | 25 May 2023 | CN | 116583964 | A | 11 August 2023 |
| | | | | EP | 4260950 | A1 | 18 October 2023 |
| | | | | JP | 2024-502420 | A | 19 January 2024 |
| | | | | JP | 7587704 | B2 | 20 November 2024 |
| | | | | KR | 10-2748260 | B1 | 27 December 2024 |
| | | | | US | 2024-0399410 | A1 | 05 December 2024 |
| | | | | WO | 2023-090633 | A1 | 25 May 2023 |
| KR | 10-2012-0093684 | A | 23 August 2012 | KR | 10-1303887 | B1 | 05 September 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230178547